# FASCICULE DE BREVET EUROPEEN

(11) **EP 0 452 174 B1**
(45) Date de publication et mention de la délivrance du brevet: **06.03.1996**
(21) Numéro de dépôt: 91400739.8
(22) Date de dépôt: 20.03.1991
(51) Int. Cl.: G05D 16/20, B60T 13/68

(54) **Système de régulation de pression à commande électrique pour un circuit hydraulique**
Elektrisch betätigte Druckregeleinrichtung für Hydraulikschaltung
Electrically operated pressure regulating device for hydraulic circuit

(30) Priorité: 12.04.1990 FR 9004702
(43) Date de publication de la demande: 16.10.1991
(73) Titulaire: ALLIEDSIGNAL EUROPE SERVICES TECHNIQUES, F-93700 Drancy (FR)
(72) Inventeur: Kervagoret, Gilbert, BENDIX EUROPE Services Techn., F-93700 Drancy (FR)
(74) Mandataire: Bentz, Jean-Paul

(56) Documents cités:
- EP-A- 0 227 209
- DE-A- 3 119 445
- FR-A- 2 503 893
- US-A- 4 744 389

## Description

L'invention concerne un système de régulation de pression à commande électrique pour un circuit hydraulique.

Elle est particulièrement adaptée aux systèmes de freinage de véhicules automobiles à antiblocage des roues au freinage. Les systèmes actuels d'antiblocage mettent en oeuvre, entre un générateur de fluide sous pression et un moteur hydraulique, une électrovalve commandée par un calculateur en fonction de signaux représentatifs de la rotation des roues du véhicule pour, de manière générale, détendre la pression du fluide dans le moteur hydraulique lorsque le calculateur détecte l'imminence du blocage d'une roue, puis connecter une deuxième source de fluide sous pression pour augmenter à nouveau la pression, jusqu'à une nouvelle détection d'imminence de blocage, le cycle se renouvelant alors.

L'électrovalve utilisée est une électrovalve fonctionnant en tout-ou-rien. Or les périodes d'antiblocage où des cycles tels le cycle précité se réalisent, durent un certain temps pendant lequel l'électrovalve change de très nombreuses fois d'états dans un temps très court. Cela provoque un bruit désagréable de battement de la partie mobile de l'électrovalve.

Par ailleurs, le système fonctionnant en tout-ou-rien, il apparait des à-coups de pression dans les freins engendrant des régimes transitoires mal contrôlés.

La présente invention a pour but d'obvier à ces inconvénients en mettant en oeuvre une électrovalve dite proportionnelle assurant dans le circuit utilisateur une pression hydraulique fonction du courant circulant dans la bobine de l'électrovalve dans une plage déterminée de déplacement du noyau magnétique de l'électrovalve.

Une telle électrovalve présente alors l'avantage de pouvoir être commandée en faisant simplement varier le courant circulant dans la bobine sans nécessiter de battements de la partie mobile; il en résulte donc une forte diminution des à-coups de pression dans les freins. En outre, une telle électrovalve peut aisément être commandée par un calculateur assurant un découpage à fréquence variable d'un courant continu tel qu'on le trouve à bord d'un véhicule automobile, ou bien un découpage à fréquence fixe et à rapport cyclique variable, l'intensité du courant intégré par la bobine étant alors fonction du rapport cyclique.

Une telle électrovalve est par exemple décrite dans US-A-4,744,389. Toutefois, l'électrovalve décrite dans ce document ne peut pas être disposée dans un circuit hydraulique de freinage à antiblocage des roues du fait des pressions mises en oeuvre, notamment lors de l'excitation de l'électrovalve. En effet, l'électrovalve de ce document est conçue pour fonctionner en permanence dans un système de régulation d'une pression relativement faible. Cette limitation physique interdit donc l'utilisation de telle électrovalve avec des pressions élevées dans le moteur hydraulique. En outre, cette électrovalve ne permet pas de faire croître linéairement la pression lorsque le courant décroit linéairement dans la bobine vice-versa.

Un but de la présente invention est de réaliser une électrovalve permettant de faire croître linéairement la pression lorsque le courant décroit linéairement dans la bobine et vice-versa et pouvant être excitée à pression élevée dans le circuit hydraulique.

La présente invention a donc pour objet un système de régulation de pression pour un circuit hydraulique comprenant au moins un générateur de fluide sous pression, un moteur hydraulique et un réservoir de fluide sous basse pression, et incluant une électrovalve pilotée par un calculateur et comportant une bobine électrique et un noyau magnétique coulissant commandant un tiroir coulissant dans un alésage prévu dans un corps, le tiroir déterminant deux chambres disposées de part et d'autre du tiroir dans l'alésage.

Selon l'invention, le tiroir comprend une enceinte hydraulique communiquant avec le moteur hydraulique et déterminant une force de réaction s'ajoutant à la force engendrée par la bobine, à l'encontre d'un moyen élastique précontraint et d'un ressort de rappel rappelant le tiroir et le noyau en position de repos.

De préférence, l'enceinte est constituée par un alésage borgne pratiqué dans le tiroir, une aiguille en appui sur le corps fermant l'enceinte de façon sensiblement étanche, tandis qu'un perçage radial la fait communiquer avec une gorge prévue à la périphérie du tiroir.

L'invention sera mieux comprise, et d'autres buts, avantages et caractéristiques de celle-ci apparaîtront plus clairement à la lecture de la description qui suit d'un mode préféré de réalisation donné à titre d'exemple non limitatif en référence aux deux planches de dessins sur lesquelles :
- la Figure 1 représente schématiquement en coupe un mode de réalisation d'un système conforme à la présente invention en position de repos,
- la Figure 2 représente schématiquement en coupe le système de la Figure 1 avec quelques fonctions complémentaires.

On sait que la bobine des électrovalves dites proportionnelles, présente la caractéristique essentielle de pouvoir fournir un effort sensiblement constant pour un courant déterminé dans une plage de déplacement du noyau magnétique non négligeable, de l'orde de 2 à 3 mm. Cette caractéristique est généralement obtenue grâce à une géométrie particulière des pièces polaires. Cette caractéristique est mise en oeuvre dans la présente invention pour assurer la fonction requise par modulation du courant circulant dans la bobine pour éviter un fonctionnement avec une partie mobile battant très rapidement.

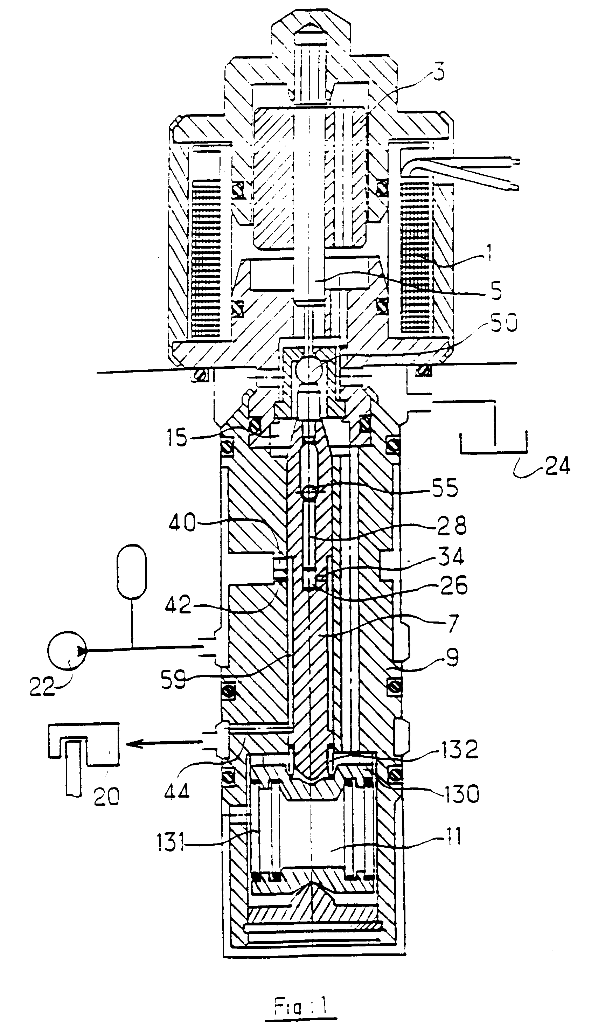

Figure 1, on reconnait une telle électrovalve comprenant une bobine d'excitation 1, un noyau magnétique coulissant 3 pourvu de son poussoir 5 s'appuyant sur un tiroir 7 coulissant dans un alésage d'un corps 9. Au moins un ressort précontraint 131, est disposé dans la chambre 11 par exemple entre deux disques ratulants, l'un s'appuyant sur le fond de l'alésage de la chambre 0.

11 et l'autre le disque 130 étant en butée au repos sur un épaulement de l'alésage. Entre ce disque 130 et le tiroir 7, est disposé un ressort de rappel 132 de la raideur nécessaire pour rappeler le tiroir en position de repos telle que représentée.

Le tiroir 7 est usiné de manière à pouvoir ouvrir ou fermer une communication entre un moteur hydraulique utilisateur 20, une source de fluide sous pression 22 et un réservoir 24 conformément aux systèmes de régulation de pression hydraulique généralement utilisés. Pour ce faire, une gorge 59 est prévue à la périphérie du tiroir 7.

Les deux chambres 11 et 15 situées de part et d'autre du tiroir 7 dans l'alésage sont soumises à la même pression. Une enceinte 26, constituée par un alésage borgne pratiqué dans le tiroir 7, détermine la force de réaction s'ajoutant à la force engendrée par la bobine 1. Cette enceinte 26 est fermée de façon sensiblement étanche par une aiguille 28 en appui sur le corps 9 par l'intermédiaire d'une butée 55, et communique avec la gorge 59 au moyen d'un perçage radial 34.

En position de repos, telle que représentée, la source de fluide sous pression 22 est en communication avec le moteur hydraulique 20 par l'intermédiaire de la gorge 59, et l'enceinte 26 est en communication avec le moteur 20. Les deux chambres d'extrêmité 11 et 15 communiquent entre elles et sont isolées du réservoir 24 au moyen d'une valve 50.

Lorsque l'électrovalve est excitée, par exemple en période d'antiblocage des roues dans le cadre de l'application préférée de l'invention, tout d'abord le courant circulant dans la bobine engendre une force s'opposant à celle du ressort 132 quelle que soit la pression régnant dans le circuit hydraulique. Ceci permet notamment à l'électrovalve de ne pas présenter une importante consommation électrique. Le déplacement du tiroir 7 à l'encontre du ressort de rappel 132 ouvre d'abord la valve 50 et met les chambres 11 et 15 en communication avec le réservoir 24 avant que le courant dans la bobine 1 n'atteigne son intensité nominale. Puis, l'intensité étant nominale, le tiroir 7 est en butée contre le disque 130 et son mouvement, à l'encontre du ressort 131, ferme le conduit 40 et la restriction 42 isolant ainsi la source de fluide sous pression 22. Du fait de la position de la gorge 59; cette dernière communique avec la chambre 11 et, par suite, avec le réservoir 24. Il se produit donc une détente de la pression du fluide dans le moteur. On aura compris que le mouvement du tiroir 7 à l'encontre du ressort 131 est engendré par le courant dans la bobine 1 et est favorisé par la réaction hydraulique dans l'enceinte 26 qui engendre une force s'ajoutant à celle engendrée par la bobine et opposée à celle engendrée par le ressort précontraint 131. En diminuant l'intensité du courant dans la bobine, la pression ayant chuté dans le moteur 20, la force de réaction hydraulique due à l'enceinte 26 diminue et le tiroir se déplace dans l'autre sens, refermant la communication entre le moteur 20 et la chambre 11, et donc le réservoir 24, et rétablissant ensuite la communication entre la source 22 et le moteur 20 par l'intermédiaire de la restriction 42 permettant une augmentation moins rapide de la pression dans le moteur 20. Si l'on augmente l'intensité du courant dans la bobine, la pression va à nouveau chuter dans le moteur 20 puisque la communication entre le moteur 20 et le réservoir 24 par l'intermédiaire de la gorge 59 et les chambres 11 et 15 sera réouverte.

On constate donc que d'une augmentation du courant dans la bobine résulte une diminution de la pression du fluide dans le moteur 20. On voit alors qu'en modulant, par exemple par découpage, le courant circulant dans la bobine 1, le tiroir 7 va prendre une position qui est fonction de la pression régnant dans l'enceinte 26, et l'on pourra, en pilotant judicieusement ce courant, appliquer au moteur 20 la pression de fluide désirée. En effet, la réaction hydraulique engendrée dans l'enceinte 26 va automatiquement ouvrir ou fermer les communications entre le moteur 20 et la source de fluide sous pression 22 et entre le moteur 20 et le réservoir 24 pour chaque valeur déterminée de l'intensité du courant circulant dans la bobine 1.

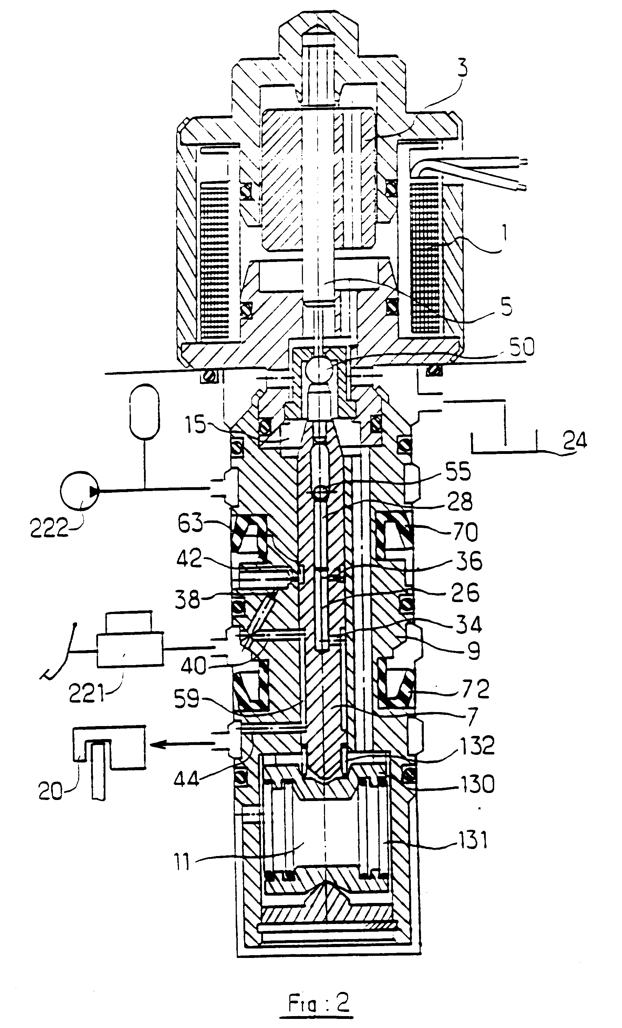

Figure 2, on a apporté quelques fonctions complémentaires au système illustré Figure 1, améliorations dont l'homme du métier comprendra aisément l'importance. La source de fluide sous pression 22 a été remplacée ici, comme cela est dans les systèmes de freinage à antiblocage des roues d'un véhicule, par deux sources distinctes. L'une 221 est une source hydrostatique, par exemple un maître cylindre commandé par la pédale de frein du véhicule ainsi équipé, l'autre 222 est une source hydrodynamique, par exemple une pompe liée à un accumulateur. Un joint 70 est disposé à l'entrée de la source hydrodynamique 222 de façon à constituer une valve anti-retour interdisant au fluide du circuit hydraulique de remonter vers la source 222. Un perçage radial 36 fait communiquer l'enceinte 26 et une gorge 63 pratiquée à la périphérie du tiroir 7 en regard, au repos, du conduit 42 où est connectée la source hydrodynamique 222. Le fluide issu de cette source 222 doit passer par le joint 70, le conduit 42, l'enceinte 26, le conduit 34, la gorge 59 et le conduit 44, pour atteindre le moteur 20. Le conduit 42 est donc favorablement une restriction permettant un contrôle de l'augmentation de la pression du fluide dans le moteur 20 après une détente de celle-ci. Une restriction 38 est également prévue en amont du conduit 42 pour le relier à la source hydrostatique 221 et réduire les pulsations transmises à la source hydrostatique 221 et, plus précisément au pied du conducteur. La gorge 59 a été modifiée pour que la source hydrostatique 221 soit isolée du moteur 20 dès excitation de l'électrovalve évitant ainsi d'avoir à ajouter un tiroir pilote du système.

Bien évidemment, on comprendra que la source hydrodynamique 222 est au repos en même temps que l'électrovalve.

Enfin, un autre joint 72 est disposé entre le moteur 20 et le conduit 40 connectée à la source hydrostatique 221 de manière à constituer une valve anti-retour utile pour permettre la détente rapide du fluide sous pression.

## Revendications

1. Système de régulation de pression pour un circuit hydraulique comprenant au moins un générateur (22) de fluide sous pression, un moteur hydraulique (20) et un réservoir (24) de fluide sous basse pression, et incluant une électrovalve pilotée par un calculateur et comportant une bobine électrique (1) et un noyau magnétique (3) coulissant commandant un tiroir (7) coulissant dans un alésage prévu dans un corps (9), ledit tiroir (7) déterminant deux chambres (11,15) disposées de part et d'autres du tiroir (7) dans ledit alésage, caractérisé en ce que ledit tiroir (7) comprend une enceinte hydraulique (26) communiquant avec ledit moteur hydraulique (20) et déterminant une force de réaction s'ajoutant à la force engendrée par ladite bobine (1), à l'encontre d'un moyen élastique précontraint (131) et d'un ressort de rappel (132) rappelant ledit tiroir (7) et ledit noyau (3) en position de repos.

2. Système de régulation de pression selon la revendication 1, caractérisé en ce que ladite enceinte (26) est constituée par un alésage borgne pratiqué dans ledit tiroir (7), une aiguille (28) en appui sur ledit corps fermant ladite enceinte (26) de façon sensiblement étanche, tandis qu'un perçage radial (34) la fait communiquer avec une gorge (59) prévue à la périphérie dudit tiroir (7).

3. Système de régulation de pression selon la revendication 1 ou 2, caractérisé en ce que ledit moyen élastique (131) est constitué par au moins un ressort logé dans l'une (11) desdites chambres.

4. Système de régulation de pression selon la revendication 3, caractérisé en ce que ledit ressort de rappel (132) est logé entre ledit moyen élastique (131) et ledit tiroir (7).

5. Système de régulation de pression selon l'une quelconque des revendication 1 à 3, caractérisé en ce que lesdites chambres (11,15) communiquent entre elles et sont isolées par rapport au réservoir (24) lorsque l'électrovalve n'est pas excitée, et en communication avec ledit réservoir (24) lorsque l'électrovalve est excitée.

6. Système de régulation de pression selon la revendication 5, caractérisé en ce qu'une valve (50) normalement fermée est disposée entre l'une (15) desdites chambres et le réservoir (24), de manière à isoler le circuit hydraulique sous pression du réservoir (24) lorsque l'électrovalve n'est pas excitée.

## Patentansprüche

1. Druckregelungssystem für einen Hydraulikkreis, das wenigstens einen Druckflüssigkeitserzeuger (22), einen Hydraulikmotor (20) und einen Niederdruckflüssigkeitsbehälter (24) sowie ein Elektroventil enthält, welches von einem Rechner gesteuert wird und eine elektrische Spule (1) sowie einen verschiebbaren Magnetkern (3) aufweist, der einen Schieber (7) steuert, welcher in einer in einem Körper (9) vorgesehenen Bohrung verschiebbar ist, wobei der Schieber (7) zwei auf beiden Seiten des Schiebers (7) in der Bohrung angeordnete Kammern (11, 15) festlegt, dadurch gekennzeichnet, daß der Schieber (7) einen hydraulischen Raum (26) aufweist, welcher mit dem Hydraulikmotor (20) verbunden ist und eine Reaktionskraft bestimmt, die zu der von der Spule (1) erzeugten Kraft hinzukommt und einem vorgespannten elastischen Mittel (131) sowie einer den Schieber (7) und den Kern (3) in die Ruhestellung zurückholenden Rückstellfeder (132) entgegenwirkt.

2. Druckregelungssystem nach Anspruch 1, dadurch gekennzeichnet, daß der Raum (26) von einer in dem Schieber (7) angebrachten Blindbohrung gebildet ist, wobei eine an dem Körper anliegende Nadel (28) den Raum (26) im wesentlichen dicht verschließt, während eine Radialbohrung (34) diesen mit einer am Umfang des Schiebers (7) vorgesehenen Nut (59) verbindet.

3. Druckregelungssystem nach Anspruch 1 oder 2, dadurch gekennzeichnet, daß das elastische Mittel (131) von wenigstens einer in einer (11) der Kammern gelagerten Feder gebildet wird.

4. Druckregelungssystem nach Anspruch 3, dadurch gekennzeichnet, daß die Rückstellfeder (132) zwischen dem elastischen Mittel (131) und dem Schieber (7) gelagert ist.

5. Druckregelungssystem nach einem der Ansprüche 1 bis 3, dadurch gekennzeichnet, daß die Kammern (11, 15) miteinander in Verbindung stehen und von dem Behälter (24) isoliert sind, wenn das Elektroventil nicht erregt ist, und mit dem Behälter (24) verbunden sind, wenn das Elekroventil erregt ist.

6. Druckregelungssystem nach Anspruch 5, dadurch gekennzeichnet, daß ein normalerweise geschlossenes Ventil (50) zwischen einer (15) der Kammern und dem Behälter (24) derart angeordnet ist, daß der unter Druck stehende Hydraulikkreis von dem Behälter (24) isoliert ist, wenn das Elektroventil nicht erregt ist.

## Claims

1. Pressure-regulating system for a hydraulic circuit, comprising at least one generator (22) of fluid under pressure, a hydraulic motor (20) and a reservoir (24) of fluid under low pressure and including a solenoid valve controlled by a computer and comprising an electrical coil (1) and a sliding magnetic core (3) controlling a slide (7) which slides in a bore provided in a body (9), said slide (7) defining two chambers (11, 15) arranged on either side of the slide (7) in said bore, characterized in that said slide (7) comprises a hydraulic cell (26) communicating with said hydraulic motor (20) and determining a reaction force added to the force generated by said coil (1), counter to a prestressed elastic means (131) and to a return spring (132) returning said slide (7) and said core (3) to the rest position.

2. Pressure-regulating system according to Claim 1, characterized in that said cell (26) consists of a blind bore made in said slide (7), while a needle (28) bearing on said body closes said cell (26) substantially sealingly, a radial duct (34) putting it in communication with a groove (59) provided on the periphery of said slide (7).

3. Pressure-regulating system according to Claim 1 or 2, characterized in that said elastic means (131) consists of at least one spring seated in one (11) of said chambers.

4. Pressure-regulating system according to Claim 3, characterized in that said return spring (132) is seated between said elastic means (131) and said slide (7).

5. Pressure-regulating system according to any one of Claims 1 to 3, characterized in that said chambers (11, 15) communicate with one another and are isolated from the reservoir (24) when the solenoid valve is not energized and are in communication with said reservoir (24) when the solenoid valve is energized.

6. Pressure-regulating system according to Claim 5, characterized in that a normally closed valve (50) is arranged between one (15) of said chambers and the reservoir (24), so as to isolate the hydraulic circuit under pressure from the reservoir (24) when the solenoid valve is not energized.
